# EUROPÄISCHE PATENTSCHRIFT

(11) **EP 2 568 189 B1**
(45) Veröffentlichungstag und Bekanntmachung des Hinweises auf die Patenterteilung: **08.11.2017**
(21) Anmeldenummer: 12006208.8
(22) Anmeldetag: 01.09.2012
(51) Int. Cl.: F16D 3/77

(54) **Wellenkupplung**
Shaft coupling
Accouplement d'arbre

(30) Priorität: 07.09.2011 DE 102011112743
(43) Veröffentlichungstag der Anmeldung: 13.03.2013
(73) Patentinhaber: Diehl Defence GmbH & Co. KG, 88662 ÜBERLINGEN (DE)
(72) Erfinder: Fischer, Klaus, 78355 Hohenfels (DE); Kempas, Hagen, 88662 Überlingen (DE)
(74) Vertreter: Diehl Patentabteilung

(56) Entgegenhaltungen:
- EP-A2- 0 229 215
- EP-A2- 0 773 381
- EP-A2- 1 347 192
- WO-A2-01/55621
- DE-A1- 2 447 582
- DE-A1- 4 220 049
- DE-A1-102005 049 433
- DE-C- 718 377

## Beschreibung

Die Erfindung betrifft eine Wellenkupplung zur kraftschlüssigen Verbindung zweier Rotationselemente. Die Wellenkupplung weist eine als Krafteingang dienende erste Kontur zur Verbindung mit einem der Rotationselemente und eine als Kraftausgang dienende zweite Kontur zur Verbindung mit dem anderen der Rotationselemente auf. Weiter erhält die Wellenkupplung zumindest eine zwischen den beiden Konturen angeordnete Federanordnung zum elastischen Verschieben der Konturen relativ zueinander.

Im Bereich des Maschinenbaus, des Apparatebaus, der Feinmechanik oder anderen technischen Gebieten besteht häufig die Notwendigkeit, zwei Rotationselemente miteinander zu verbinden, beispielsweise einen Motorabtrieb in Form einer Welle oder eines Ritzels und/oder eines Getriebeantriebs. Voraussetzung für ein gutes regelungstechnisches Verhalten der beiden Rotationselemente ist eine verdrehsteife und spielfreie Übertragung des Antriebsmoments von einem der Rotationselemente auf das andere. Hierbei sollten axiale und möglichst auch radiale Fluchtungsfehler der beiden Rotationselemente zueinander ausgeglichen werden. Außerdem ist es vorteilhaft, wenn nur sehr kleine Rückstellreaktionen zwischen den beiden Rotationselementen auftreten.

Außerdem ist eine kompakte Bauweise einer Wellenkupplung in vielen mechanischen Bereichen wünschenswert.

Aus dem Stand der Technik sind diverse Wellenkupplungen und Steckverbindungen bekannt: Die DE 42 20 049 A1 beschreibt eine Wellenkupplung basierend auf einer Membran mit ineinandergreifenden Linien zur Minimierung von Versatz jedweder Art. Die EP 0 773 381 A2 zeigt ein Kupplungsfederelement in Form einer Platte, in welcher U-förmige und W-förmige Schlitze eingebracht sind, um eine Drehsteifigkeit zu gewährleisten. Die DE 718 377 C beschäftigt sich mit einer scheibenförmigen Kupplungsspiralfeder, die durch spiralige Sägeschnitte in eine Spiralfeder mit mittlerem und äußerem Einspannstück zur elastischen Ankopplung von Wellen aufgeteilt ist. Aus der DE 24 47 582 A1 ist ein Zahnräderwechselgetriebe mit einem radial verlagerbaren Verteilzahnrad bekannt. Um radiale Verlagerungen des Verteilzahnrades ohne störenden Reibungseinflüsse zuzulassen, wird innerhalb des Verteilzahnrades ein Ausgleichsring vorgesehen. Die DE 10 2005 049 433 A1 zeigt eine axiale Steckverbindungsanordnung. Die Anordnung umfasst ein Profil- und ein Gegenprofilelement, welche durch axiales Zusammenfügen drehfest miteinander verbunden werden. Die Elemente sind dabei derart profiliert, dass durch direktes Aneinandergreifen der Profilierungen ein in Umfangsrichtung wirkendes Vorspannmoment zum gegenseitigen Verspannen aufbringbar ist. Die EP 0 229 215 A2 zeigt eine Kupplung zur unverdrehbaren Verbindung von sich in einem radialen Abstand umschließenden Maschinenteilen umfassend einen in dem durch den Abstand gebildeten Spalt angeordneten Kupplungskörper. Dieser Kupplungskörper weist außen und innen sich quer zur Rotationsachse erstreckende, an Federzungen angeordnete Mitnehmer auf. In der WO 01/55621 A2 wird eine Mitnehmerscheibe zur Moment-Übertragung beschrieben, welche einen in radiale Richtung verlaufenden Schenkel in Form eines Scheibenteils und einen in axiale Richtung verlaufenden Schenkel in Form eines Flansches zur Befestigung an einer Antriebseinheit bzw. einem Wandler aufweist. Der radial verlaufende Schenkel weist Ausnehmungen und der axial verlaufende Schenkel Laschen im Bereich der Ausnehmungen auf, so dass die Mitnehmerscheibe in radialer Richtung biegeweich ist. Die EP 1 347 192 A2 beschäftigt sich mit scheibenförmigen, radial nachgiebigen Wellenkupplungen. Eine solche Kupplung weist beispielsweise eine Nabe zur Kupplung mit einem Maschinenteil, wie eine Welle, auf. Die Nabe weist eine zentrale, in sich geschlossene Bohrung auf, in die eine Stahlhülse eingepresst oder eingegossen sein kann.

Es ist daher eine Aufgabe der vorliegenden Erfindung, eine Wellenkupplung anzugeben, die einen federnden Ausgleich von Wellenfehlern erlaubt und die besonders kompakt und klein bauend ist.

Diese Aufgabe wird durch eine Wellenkupplung gemäß den Merkmalen von Patentanspruch 1 gelöst, bei der die Federanordnung zwei radial zueinander angeordnete Gegenelemente, ein die Gegenelemente zueinander federnd lagerndes Federmittel und eine Ausnehmung radial zwischen den Gegenelementen enthält, die einen radialen Federweg zwischen den Gegenelementen ermöglicht. Durch den radialen Federweg kann ein axialer Bauraum gering gehalten werden, so dass eine kompakte Konstruktion der Wellenkupplung möglich ist.

Ein Rotationselement kann eine Welle, ein Ritzel oder ein anderes Kraft übertragendes Bauteil sein, zweckmäßigerweise eines Antriebsstrangs. Die Konturen sind jeweils zur Verbindung mit einem der Rotationselemente vorbereitet. Hierzu können sie ein Formschlussmittel aufweisen, das einen Formschluss in Rotationsrichtung bzw. Umfangsrichtung mit dem Rotationselement erzeugt. Die Federanordnung kann zu einem elastischen Ausgleich eines Fluchtungsfehlers vorbereitet sein, z.B. eines radialen Achsversatzes und/oder eines Winkelfehlers, also einer Nicht-Parallelität der Rotationsachsen der beiden Rotationselemente.

Zweckmäßigerweise ist die Wellenkupplung zur Verbindung solcher Rotationselemente vorbereitet, deren Axialrichtungen im Idealfall, also abgesehen von einem eventuellen auszugleichenden Winkelfehler, parallel sind beziehungsweise abgesehen von einem eventuellen auszugleichenden Achsversatz zueinander fluchten.

Die beiden Gegenelemente können alle möglichen Elemente sein, die federnd zueinander lagerbar sind. Sie sind zweckmäßigerweise starre Elemente ohne eine eigene Federwirkung. Sie sind radial zueinander angeordnet, wobei sich die Radialrichtung auf zumindest eines der Rotationselemente bezieht. Die Ausnehmung ist radial zwischen den Gegenelementen angeordnet, so dass in Radialrichtung, beispielsweise von innen nach außen, zuerst ein Gegenelement, dann die Ausnehmung und dann wieder ein Gegenelement angeordnet sind.

Gemäß der Erfindung ist vorgesehen, dass die Federanordnung eines der Rotationselemente umgreift und federklemmend hält. Diese Federanordnung ist zweckmäßigerweise eine innere Federanordnung. Hierdurch kann ein Radiusfehler des umgriffenen Rotationselements ausgeglichen werden, ohne dass ein Spiel zwischen der Federanordnung und dem Rotationselement entsteht. Die Federanordnung kann Formschlussmittel zum Eingreifen in das Rotationselement und zur formschlüssigen Drehverbindung mit dem Rotationselement aufweisen.

Ein einfacher Maßtoleranzausgleich und eine einfache Zusammenfügung eines der Rotationselemente mit der Wellenkupplung kann erreicht werden, wenn eine der Konturen eine Innenkontur ist und die Federanordnung eine federnde Weitung dieser Kontur unter Erzeugung einer Vorspannung erlaubt, so dass diese Kontur von mehreren Richtungen radial nach Innen unter Wirkung der Vorspannung auf eines der Rotationselemente anrückt. Die Wellenkupplung ist hierbei so geformt, dass die federnde Weitung im regulären Betrieb auftritt und vorteilhaft ist.

Zweckmäßigerweise hält die Federanordnung das Rotationselement achssteif, lässt also keinen Achsversatz zu. Um ein Spiel im Übertragungsmoment zu verhindern hält die Federanordnung das Rotationselement zweckmäßigerweise auch verdrehsteif.

Entsprechend der Erfindung weist die Federanordnung eine Anzahl von inneren Gegenelementen auf, die jeweils als Ritzelgegenzahn ausgeführt sind und einen Teil einer der Konturen bilden, die eine Innenkontur ist. Auf eine gesonderte Wellenbefestigung kann auf diese Weise verzichtet werden. Ein Ritzelgegenzahn ist ein Element zum Eingriff in eine Verzahnung einer Ritzelwelle. Zweckmäßigerweise sind die Ritzelgegenzähne zum Eingriff in das als Ritzelwelle ausgestaltete Rotationselement ausgeführt.

Eine besonders günstige Anpassung einer Kontur an eines der Rotationselemente kann erreicht werden, wenn die Gegenelemente jeweils unabhängig voneinander federnd radial auslenkbar sind.

Zusätzlich zu der bisher beschriebenen Federanordnung kann eine andere Federanordnung vorhanden sein, die insbesondere eine äußere Federanordnung ist, die radial außerhalb der ersteren Federanordnung angeordnet ist. Diese zweite Federanordnung ist vorteilhafterweise so ausgestaltet, dass deren Federwirkung einen Achsversatz zwischen den beiden Rotationselementen federnd ausgleicht.

Hierbei ist es vorteilhaft, wenn die zweite Federanordnung eine erste Federeinheit aufweist, deren beide Gegenelemente zwei parallel zueinander angeordnete und insbesondere biegesteife Elemente sind, die durch zumindest zwei Federmittel miteinander verbunden sind, deren Federauslenkung eine Parallelverschiebung der beiden Gegenelemente bewirkt.

Ein Achsversatz in eine beliebige Richtung kann ausgeglichen werden, wenn die Federanordnung zumindest zwei Federeinheiten aufweist, die jeweils einen Achsversatz der beiden Rotationselemente federnd ausgleichen, allerdings in verschiedenen Richtungen. Zweckmäßigerweise sind die Richtungen senkrecht zueinander.

Weiter wird vorgeschlagen, dass das Federmittel eine Blattfeder ist. Eine Blattfeder ist senkrecht zur Federrichtung besonders steif, also in Axialrichtung und/oder Tangentialrichtung. Einer ungewünschten Federbewegung kann hiermit entgegengewirkt werden. Die Blattfeder ist zweckmäßigerweise radialfedernd angeordnet.

Eine kompakte Bauweise der Wellenkupplung kann weiter begünstigt werden, wenn sie einen die beiden Federanordnungen bildenden Federträger enthält, der ein senkrecht zur Axialrichtung der Rotationselemente ausgerichtetes Plattenelement ist. Die Ausrichtung der Rotationselemente kann sich hierbei durch die Bauart der Wellenkupplung selbst ergeben, beispielsweise die Form der beiden Konturen, die die Axialrichtung der Rotationselemente festlegen.

Vorteilhafterweise reicht die Ausnehmung in Axialrichtung durch den gesamten Federträger. Auf diese Weise können die Gegenelemente besonders einfach als sehr verbindungssteife Elemente, beispielsweise Blattfedern, ausgeführt werden.

Besonders einfach, präzise und kostengünstig herstellbar ist die Wellenkupplung, wenn die Ausnehmung durch einen Schnitt in einem die beiden Federanordnungen bildenden Federträger ausgebildet ist.

Mit gleichem Vorteil sind zweckmäßigerweise sowohl die Ausnehmung als auch die beiden Konturen durch Schnitte ausgeführt, beispielsweise durch beziehungsweise um den Federträger. Eine kostengünstige und exakte Herstellung der Wellenkupplung kann erreicht werden, wenn der oder die Schnitte ein beziehungsweise mehrere Erodierschnitte sind.

Eine radiale Federrichtung in mehrere unterschiedliche Radialrichtungen kann in einfacher Weise erreicht werden, wenn der Schnitt teilweise um eine Zentralachse, beispielsweise eine Rotationsachse, von einer der Konturen geführt ist. Diese Kontur ist zweckmäßigerweise eine Innenkontur zum Umgreifen eines der beiden Rotationselemente.

Eine weitere vorteilhafte Ausgestaltung der Erfindung sieht vor, dass mehrere radiale Federwege erlaubende Ausnehmungen in Form von Schnitten vorhanden sind, die einander teilweise umgreifen. Ein Achsversatz in beliebige radiale Richtungen kann bei dieser Ausführung auf sehr Platz sparende Weise federnd ausglichen werden.

Die Schnitte können einen gebogenen Verlauf aufweisen. Eine einfache Herstellung kann jedoch dadurch erreicht werden, dass die Schnitte in rechteckigen, zumindest U-förmigen Linien geführt sind, also zumindest zwei zumindest weitgehend parallele Abschnitte und einen senkrecht zu diesen ausgerichteten Mittelabschnitt aufweisen.

Einer Kompaktheit der Wellenkupplung, also einer kurzen Bauform in Axialrichtung, ist es außerdem förderlich, wenn die Federanordnung radial zwischen den beiden Konturen angeordnet ist. Mit gleichem Vorteil sind zweckmäßigerweise die beiden Konturen zumindest teilweise einander radial überdeckend angeordnet. Die Kompaktheit in Axialrichtung kann weiter erhöht werden, wenn die beiden Konturen und die Federanordnung in einer Ebene angeordnet sind, die senkrecht zu einer Axialrichtung der Rotationselemente liegt.

Weiter ist es vorteilhaft, wenn die Wellenkupplung eine Muffe aufweist, in die ein Element, zweckmäßigerweise ein Federträger der Wellenkupplung, eingefügt ist, wobei dieses Element die beiden Konturen aufweist. Hierdurch kann eine kostengünstige Herstellung der Wellenkupplung durch zumindest zwei Bauteile erreicht werden.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen. Insbesondere sind diese Merkmale jeweils einzeln und in beliebiger geeigneter Kombination mit dem erfindungsgemäßen Verfahren des unabhängigen Anspruchs kombinierbar.

Weitere Vorteile ergeben sich aus der folgenden Zeichnungsbeschreibung. In der Zeichnung sind Ausführungsbeispiele der Erfindung dargestellt, die der Erläuterung der Erfindung dienen. Die Erfindung ist jedoch nicht auf die darin angegebene Kombination von Merkmalen beschränkt, auch nicht in Bezug auf funktionale Merkmale. So können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit dem erfindungsgemäßen Verfahren des unabhängigen Anspruchs kombiniert werden.

Es zeigen:
- Fig. 1: eine Wellenkupplung mit einem Federträger und einer Muffe und zwei durch die Wellenkupplung verbundene Wellen in einer Explosionszeichnung,
- Fig. 2: den Federträger aus Fig. 1 in einer vergrößerten perspektivischen Ansicht,
- Fig. 3: den Federträger aus Fig. 2 in einer weiteren perspektivischen Darstellung von vorne,
- Fig. 4 a: eine Prinzipskizze zur Erläuterung der in Fig. 5 a gezeigten Federeinheit,

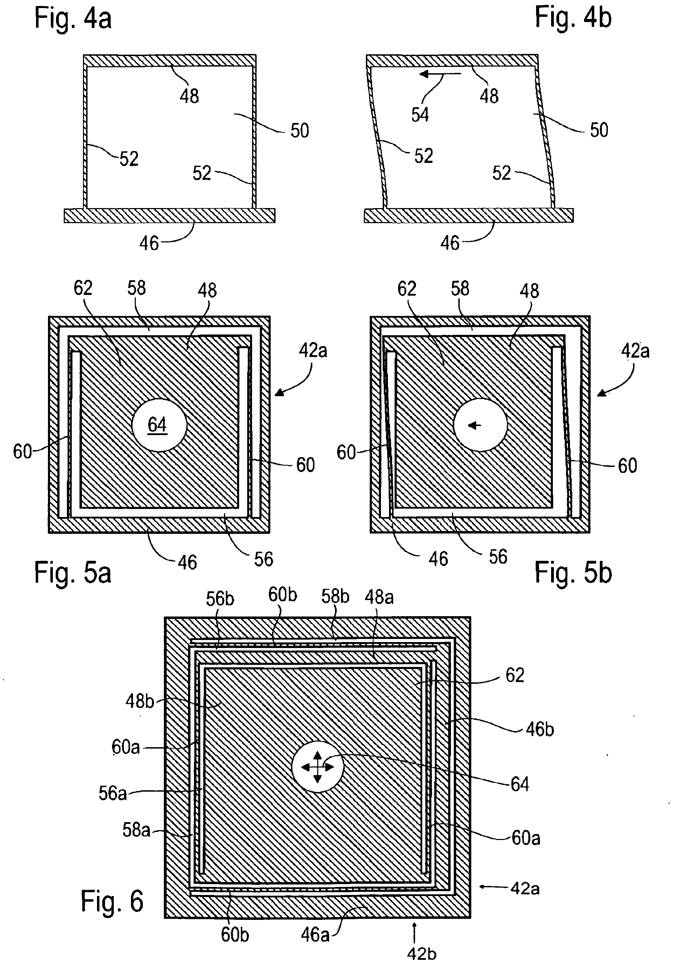

- Fig. 4 b: eine Prinzipskizze zur Erläuterung der in Fig. 5b gezeigten Federeinheit,
- Fig. 5 a: eine Federeinheit einer Federanordnung,
- Fig. 5 b: die Federeinheit aus Fig. 5 a in federnd ausgelenktem Zustand und
- Fig. 6: zwei ineinander angeordnete Federeinheiten gemäß Fig. 5.

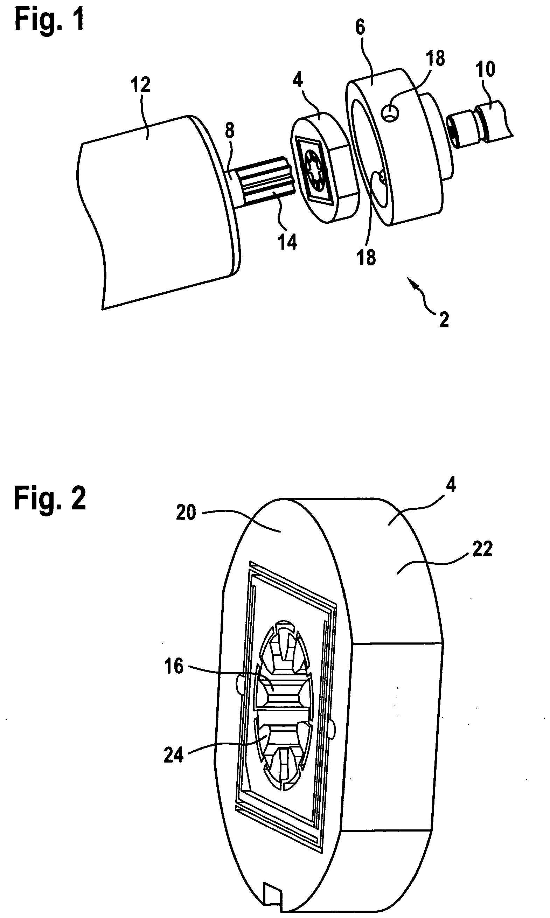

Fig. 1 zeigt eine Wellenkupplung 2 mit einem Federträger 4 und einer Muffe 6 zur spielfreien und sehr drehsteifen Verbindung von zwei Rotationselementen 8, 10, die im gezeigten Ausführungsbeispiel Wellen sind. Das Rotationselement 8 ist eine Motorwelle eines Motors 12 und das Rotationselement 10 ist eine Abtriebswelle bzw. eine Antriebswelle für eine weitere Einheit, beispielsweise ein Getriebe. Das Rotationselement 8, im Folgenden auch Motorwelle oder Ritzelwelle genannt, ohne dass damit eine Einschränkung hinsichtlich der Wellenkupplung 2 verbunden wäre, trägt an seinem Ende eine Verzahnung 14 in der Art eines Stirnrads und bildet daher eine Ritzelwelle.

Zum Verbinden der beiden Rotationselemente 8, 10 kann der Federträger 4 auf das Ritzelende der Motorwelle aufgesteckt werden, so dass er mit einer Kontur 16 (siehe Fig. 2), die als Innenkontur ausgebildet ist, die Verzahnung 14 in Rotationsrichtung formschlüssig umgreift. Weiter wird die Muffe 6 um den Federträger 4 gelegt und beispielsweise mittels Madenschrauben, die in Ausnehmungen 18 der Muffe 6 eingeschraubt werden können, im Inneren der Muffe 6 befestigt. Die Abtriebswelle 10 kann in einer geeigneten Art und Weise mit der Muffe 6 drehfest verbunden werden, so dass eine drehfeste Verbindung zwischen den beiden Rotationselementen 8, 10 über die Wellenkupplung 2 zustande kommt.

Fig. 2 zeigt den Federträger 4 in einer vergrößerten perspektivischen Ansicht schräg von der Seite. Der Federträger 4 ist als ein plattenförmiges Element ausgeführt mit zwei einander gegenüberliegenden Flachseiten 20, von denen in Fig. 2 nur eine Flachseite 20 sichtbar ist. Die beiden Flachseiten 20 sind zueinander parallel und erstrecken sich zumindest im Wesentlichen, im gezeigten Ausführungsbeispiel vollständig, in radialer Richtung über das gesamte Bauteil, abgesehen von Ausnehmungen. Der Federträger 4 ist aus einem Federstahl gebildet und mit der Innenkontur 16 und einer Außenkontur 22 versehen, wobei die innere Kontur 16 zur Verbindung mit der Motorwelle 14 und die äußere Kontur 22 zur Verbindung - im gezeigten Ausführungsbeispiel mittelbar über die Muffe 6 - mit dem anderen Rotationselement 10 vorbereitet ist. Hierzu tragen beide Konturen 16, 22 Formschlusselemente, die von einer Rotationssymmetrie abweichen und mit denen ein Formschluss in Rotationsrichtung mit weiteren Elementen, beispielsweise dem Rotationselement 8 und der Muffe 6, hergestellt werden kann. Die Innenkontur 16 ist hierbei für eine direkte Verbindung mit dem Rotationselement 8 vorgesehen und trägt eine Verzahnung 24 zum formschlüssigen Umschließen des Ritzelendes der Ritzelwelle 14.

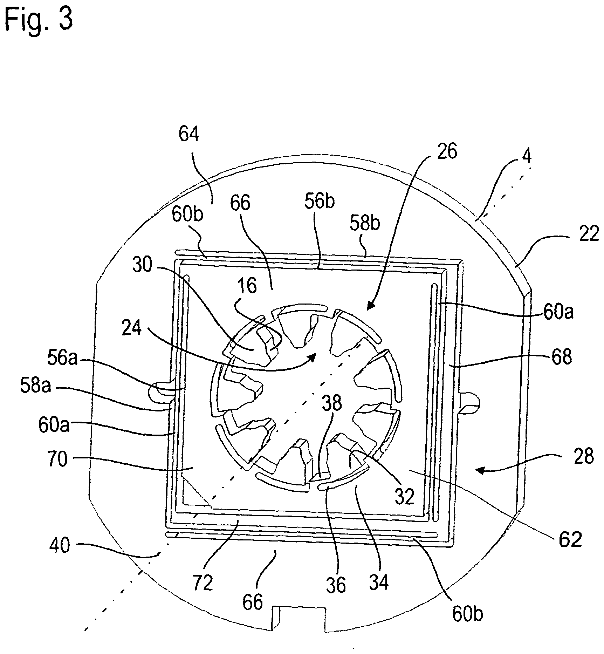

Fig. 3 zeigt den Federträger 4 in einer weiteren perspektivischen Darstellung schräg von vorne. Der Federträger 4 ist mit zwei voneinander unabhängig wirkenden Federanordnungen 26, 28 versehen, der inneren Federanordnung 26 und der die innere Federanordnung 26 vollständig umschließenden äußeren Federanordnung 28. Auch wenn die beiden Federanordnungen 26, 28 in den Zeichnungen in einen Federträger 4 gemeinsam realisiert dargestellt sind, so können diese beiden Federanordnungen 26, 28 ebenso gut auch separat in entsprechenden Federträgern realisiert sein. Sind beide Federanordnungen 26, 28 gemeinsam realisiert, so ergänzen sie sich in ihrer Wirkweise.

Die innere Federanordnung 26 wirkt unmittelbar auf die Zähne 30 der Verzahnung 24, die als Ritzelgegenzähne zum Einriff in die Ritzelwelle des Rotationselements 8 vorbereitet sind. Jedem Zahn 30 sind hierbei jeweils zwei Gegenelemente 32, 34 zugeordnet, nämlich der Zahn 30 an sich als erstes Gegenelement 32 und ein innerer Rahmen als zweites Gegenelement 34. Beide Gegenelemente 32, 34 sind zwar in sich steif und nicht federnd, sind jedoch zueinander federnd gelagert. Diese Federlagerung wird erreicht durch eine Ausnehmung 36 zwischen den Gegenelementen 32, 34 und ein Federmittel 38. Das Federmittel 38 hat die Form einer sehr kurzen Blattfeder, die einen radialen Federweg, also einen Federweg in Radialrichtung, jedoch keine Federung in Axialrichtung, also parallel zu einer Rotationsachse 40 des Rotationselements 8 beziehungsweise des Federträgers 4, und auch keinen Federweg in Tangentialrichtung, also in Drehrichtung um die Rotationsachse 40, zulässt. Das innere Gegenelement 32 ist so radial gegen das äußeren Gegenelement 34 federnd gelagert.

Durch die Federanordnung 26 ist jeder Zahn 30 der Verzahnung 24 radial federnd gelagert. Ein in diese Verzahnung 24 eingreifendes Rotationselement 8 mit einer entsprechenden Verzahnung 14, z.B. eine Ritzelwelle kann hierdurch sehr leicht drehformschlüssig mit dem Federträger 4 verbunden werden, indem die Verzahnung 14 in die Verzahnung 24 eingesteckt wird. Die Verzahnung 14 kann hierbei radial etwas ausgedehnter ausgeführt sein, als es die Verzahnung 24 in unausgelenktem Zustand, also in federspannungsfreiem Zustand, zulässt. Ein Einschieben der Verzahnung 14 in die Verzahnung 24 bewirkt dann eine radiale Auslenkung der Verzahnung 24 beziehungsweise der einzelnen Zähne 32 nach radial außen. Die Verzahnung 24 liegt nun mit einer Vorspannung an der Verzahnung 14 an. Durch die Vorspannung können herstellungsbedingte Toleranzen der Verzahnungen 14, 24 derart ausgeglichen werden, dass die beiden Verzahnung 14, 24 vollkommen spielfrei aneinander liegen, also auch kein Spiel in Rotationsrichtung vorhanden ist. Es kommt somit eine spielfreie Verbindung zwischen dem Rotationselement 8 und der Wellenkupplung 2 zustande.

Durch die Federmittel 38 an den einzelnen Zähnen 30 drücken die Zähne 30 auf die Verzahnung 14 mit einer ständigen, radialen Vorspannkraft. Die Momentenübertragung verursacht jedoch eine tangentiale Kraftwirkung, also längs zur Blattfederform der Federmittel 38, das heißt, die Blattfeder wird auf Knickung beansprucht und in dieser Richtung ist die Blattfeder extrem steif. Die Momentenübertragung erfolgt daher wegen der Vorspannung spielfrei und wegen der Steifigkeit der Federmittel 38 auch drehsteif.

Ein Winkelfehler der gelagerten Wellen wirkt sich quer zur Blattfeder aus. In dieser Richtung sind die Blattfedern weich und die Abweichungen können von den Blattfedern aufgenommen werden, ohne große Rückstellkräfte auf das Motordrehmoment zu verursachen. Außerdem werden durch den Eingriff der beiden Verzahnungen 14, 24 keine zusätzlichen Verschraubungen oder Fixierungen der Wellenkupplung 2 an der Motorwelle beziehungsweise Ritzelwelle benötigt.

Dass die Verzahnungen 14, 24 einen langen axialen Versatz des Rotationselements 8 mit der Wellenkupplung 2 zulassen, ist sofort ersichtlich. Das Rotationselement 8 ist über die Länge seiner Verzahnung 14 in der Verzahnung 24 verschiebbar, ohne dass es zu einer Übertragung von unerwünschten Axialkräften auf die Motorwelle 8, den Motor 12 oder die Wellenkupplung 2 käme. Da keine Fixierung von Kupplung und Zahnradwelle benötigt wird, spielen außerdem axiale Relativbewegungen von Rotationselement 8 und Wellenkupplung 2 im Millimeterbereich keine Rolle.

Bei dieser Erfindung kann der Antrieb in die Kupplung gesteckt werden, ohne spezielle Fixierung von Ritzelwelle und Wellenkupplung 2. Der Formschluss kann über eine Verzahnung realisiert werden. Die Montage und Demontage sind dadurch sehr vereinfacht, da axial keine Fixierung nötig ist. Auch können keine axialen Kräfte auf den Antrieb übertragen werden, vergleichbar wie bei einer Stirnradverzahnung. Durch die federnde und eine Vorspannung erzeugende Aufnahme beziehungsweise Lagerung des Rotationselementes 8 im Federträger 4 wird neben einer besonders leichten Verbindbarkeit des Rotationselementes 8 mit der Wellenkupplung 2 auch eine spielfreie Lagerung dieser beiden Elemente zueinander erreicht. Die Zähne 30 der Wellenkupplung 2 bleiben durch die Federwirkung auch bei Mikroverschleiß im Eingriff und somit ist der Federträger 4 wartungsfrei.

Die radial federnde Aufnahme des Rotationselementes 8 in der Wellenkupplung 2 beziehungsweise im Federträger 4 ist in dem vorliegenden Ausführungsbeispiel durch die Verzahnung 14 und die federnde Verzahnung 24 realisiert. Anstelle der Verzahnungen 14, 24 sind jedoch auch andere tangentiale Formschlusselemente möglich, deren Elemente in einem entsprechend modifizierten Federträger federnd gelagert sind. Die Erfindung ist somit nicht auf eine Verzahnung 24 beschränkt.

Ein Achsversatz kann durch die Federanordnung 26 allerdings nicht ausgeglichen werden, da dieser stets durch diejenigen Zähne 30 der Verzahnung 24 blockiert wird, die senkrecht oder zumindest im Wesentlichen senkrecht zu diesem Achsversatz nach radial innen weisen.

Ein solcher Achsversatz kann jedoch durch die Federanordnung 28 ausgeglichen werden. Die Federanordnung 28 ist aus zwei Federeinheiten 42a, 42b gebildet, von denen eine Federeinheit 42a zur einfacheren Erklärung in den Figuren 5a und 5b dargestellt ist.

Zunächst sei jedoch auf die Figuren 4a und 4b verwiesen, die zur Erläuterung der Federeinheiten 42a, 42b dienen. Fig. 4a zeigt einen Rahmen, beispielsweise aus Metall, der zur Kenntlichmachung des Materials schraffiert dargestellt ist. Der Rahmen hat eine Basis 46 und ein Dach 48, und er bildet in seinem Innern eine Öffnung 50. Zwei seitliche Stege 52 sind wesentlich dünner als Basis 46 und Dach 48 ausgeführt. Sie dienen als Federmittel, wobei Basis 46 und Dach 48 die Gegenelemente sind. Basis 46 und Dach 48 weisen eine Längsrichtung auf und sind parallel zueinander.

Wie in Fig. 4b gezeigt ist, kann das Dach 48 in Längsrichtung relativ zur Basis 46 federnd bewegt werden. Diese Federbewegung ist durch den in Längsrichtung 54 ausgerichteten Pfeil gekennzeichnet. Die seitlichen Stege werden hierbei S-förmig elastisch deformiert, wobei Basis 46 und Dach 48 parallel zueinander verbleiben.

Dieses Prinzip ist auf die in Fig. 5a dargestellte Federeinheit 42a übertragen. Sie ist - im Gegensatz zu dem Rahmen aus den Figuren 4a und 4b - aus Vollmaterial gearbeitet, z.B. einer Metallplatte, wobei das Material zur besseren Kenntlichmachung wieder schraffiert gezeichnet ist, wie bei einem Längsschnitt durch die Platte. In die Platte sind zwei U-förmige Ausnehmungen 56, 58 eingebracht, die gegensinnig ineinander greifen. Sie bilden zwischen ihren U-Schenkeln zwei dünne, seitliche Stege als Federmittel 60 und sind so in der Platte angeordnet, dass eine Basis 46 und ein Dach 48 vorhanden sind, die beide wesentlich dicker als die dünnen Stege sind. Das Dach 48 ist kaum als solches erkennbar, denn es ist Teil eines inneren Rahmens 62 um eine Öffnung 64, z.B. zum Einbringen einer Welle.

Nach dem in Fig. 4b gezeigten Prinzip kann nun das Dach 48 in eine Richtung relativ zur Basis 46 federnd ausgelenkt werden, wie in Fig. 5b gezeigt ist. Die Auslenkrichtung ist wiederum die Längsrichtung von Basis 46 und Dach 48. Mit dem Dach 48 wird auch der Rahmen 62 in die gleiche Richtung bewegt, so dass sich auch die Öffnung 64 federnd mitbewegt. Eine Drehung ist mit dieser Federbewegung nicht verbunden.

Fig. 6 zeigt, wie zwei Federeinheiten 42a und 42b ineinander angeordnet sind. Die Federeinheiten 42a, 42b sind um 90° zueinander verdreht. Beide weisen eine Basis 46a, 46b und ein Dach 48a, 48b auf sowie jeweils zwei Federmittel 60a, 60b, die Basis 46a, 46b und Dach 48a, 48b miteinander verbinden. Basis 46a, 46b und Dach 48a, 48b sind jeweils wesentlich dicker ausgeführt, als die Federmittel 60a, 60b, z.B. mindestens 3x so dick, um eine ausreichende Steifigkeit zu wahren. Die Steifigkeit ist nötig, um eine Verdrehung mit der Federbewegung zu vermeiden.

Wie zu Fig. 5b erläutert, ist auch in Fig. 6 der innere Rahmen 62 und mit ihm die Öffnung 64 jeweils in Längsrichtung von Basis 46a, 46b und Dach 48a, 48b federnd auslenkbar, wie durch die Doppelpfeile in der Öffnung 64 angedeutet ist. Durch die Verdrehung der beiden Federeinheiten 42a und 42b zueinander sind die Längsrichtungen unabhängig voneinander, so dass die Öffnung 64 zweidimensional beweglich ist, und zwar im Bereich der Dicke der Ausnehmungen 56a, 56b, 58a, 58b.

Im Prinzip weist jede Federeinheit 42a, 42b eine Ausnehmung 56a, 58a bzw. 56b, 58b auf. Durch die Verschachtelung der Federeinheiten 42a, 42b können die mittleren Ausnehmungen 56b und 58a jedoch zusammengelegt werden, so dass aus zwei U-förmigen Ausnehmungen eine O-förmige Ausnehmung wird, die jedoch vier eckig zueinander angeordnete Schenkel aufweist und nicht geschlossen sein darf, um den inneren Rahmen 62 zu halten.

Das in Fig. 6 gezeigte Prinzip ist nun in der Wellenkupplung 2 übernommen, und zwar in dem in Fig. 3 dargestellten Federträger 4. Beide Federeinheiten 42a, 42b bilden die äußere Federanordnung 28, durch die die innere Welle 8 relativ zum äußeren Rahmen 64 und damit relativ zur äußeren Kontur 22 zweidimensional beweglich und federnd gelagert ist. Hierdurch kann ein Achsversatz zwischen den Rotationselementen 8, 10 ausgeglichen werden. Dächer 48a, 48b und Basen 46a, 46b bilden die Gegenelemente 66, 68 bzw. 70, 72, die Federmittel 60a, 60b sind analog zu Fig. 6 gebildet. Aus dem Vergleich zwischen den Figuren 3 und 6 ist ersichtlich, dass es mehrere Kombinationsmöglichkeiten zur Anordnung der Ausnehmungen 56a, 56b, 58a, 58b zueinander gibt.

Durch die blattfederartige Ausgestaltung der Federmittel 60a, 60b ist der innere Rahmen 62 radial federbeweglich zum äußeren Rahmen 64 gelagert. Durch die Anordnung der Ausnehmungen 56a, 56b, 58a, 58b zueinander besteht diese radiale federnde Beweglichkeit in allen vier Radialrichtungen beziehungsweise durch eine Kombination der Federbewegungen in allen Radialrichtungen. Durch die äußere Federanordnung 28 werden also radiale Fehler ohne große Rückstellkräfte aufgenommen.

Durch die Ausführung der mittleren Federmittel 60a, 60b in einer Blattfederform wird eine Bewegung beziehungsweise Federung in Axialrichtung und auch in Rotationsrichtung gehemmt, so dass ein Spiel der Wellenkupplung 2 in Rotationsrichtung vermieden wird und die Drehsteifigkeit erhalten bleibt. Je nach Ausführungen der Gegenelemente 50, 52 kann auch ein Winkelfehler der beiden Rotationselement 8, 10 beziehungsweise deren Rotationsachsen zueinander durch die Federanordnung 28 ausgeglichen werden.

Die beiden Konturen 16, 22 können durch einfache Schnitte in einem plattenförmigen Element hergestellt werden, zweckmäßigerweise Erodierschnitte in einer Stahlplatte. Besonders vorteilhaft ist, dass auch die beiden Federanordnungen 26, 28 derart angelegt sind, dass sie vollständig durch Schnitte im Federträger 4 hergestellt werden können, zweckmäßigerweise ebenfalls Erodierschnitte, wobei auch andere Fertigungsmöglichkeiten denkbar sind. Auf diese Weise kann der Federträger 4 exakt durch lediglich Schnitte in einem Plattenelement hergestellt werden.

Die beiden Konturen 16, 22 und die Federanordnungen 26, 28 sind in einer Ebene angeordnet, die senkrecht zur Axialrichtung der Rotationselemente 8, 10 beziehungsweise der Wellenkupplung 2 liegt. Die beiden Konturen 16, 22 sind radial zueinander angeordnet, wobei sich die beiden Konturen 16, 22 in Radialrichtung überdecken, im gezeigten Ausführungsbeispiel sogar identisch überdecken. Da auch die beiden Federanordnungen 26, 28 radial zwischen den beiden Konturen 16, 22 angeordnet sind, im gezeigten Ausführungsbeispiel sogar vollständig radial zwischen den Konturen 16, 22, ist die Wellenkupplung 2 extrem kompakt in Axialrichtung ausgeführt. Der Federträger 4 kann integraler Bestandteil der Welle sein oder in eine Hohlwelle eingepresst oder geklebt werden. Sowohl ein Winkelfehler als auch ein Achsversatz, wie auch eine federnd klemmende damit spielfreie Halterung des Rotationselementes 8 kann somit auf kleinstem axialen Bauraum von beispielsweise wenigen Millimetern gewährleistet sein. Ein Drehmoment wird spielfrei und verdrehsteif übertragen.

Bei dem in den Figuren gezeigten Ausführungsbeispiel verbindet die Wellenkupplung 2 die beiden axial zueinander angeordneten Rotationselemente 8, 10 spielfrei und sehr drehsteif. Ein Achsversatz der beiden Rotationselemente 8, 10 zueinander verursacht keine nennenswerten Drehmomente oder radiale Kräfte auf die Rotationselemente 8, 10. Außerdem ist ein axialer Versatz der Rotationselemente 8, 10 zueinander zulässig und kann einfach ausgeglichen werden. Es werden hierbei keine axialen Kräfte auf die Rotationselemente 8, 10 ausgeübt. Weiter ist keine Fixierung, z.B. Verschraubung der Rotationselemente 8, 10 mit der Wellenkupplung 2 nötig.

Die Konturen 16, 22 und die Ausnehmungen 36, 56a, 56b, 58a, 58b sind radial zum Rotationselement 8 angeordnet, wodurch eine sehr kurz bauende Konstruktion ermöglicht wird. Die Konturen 16, 22 und die Ausnehmungen 36, 56a, 56b, 58a, 58b reichen durchgehend durch den Federträger 4, wobei zu deren Herstellung das Erodierschneiden, Laserschneiden oder andere Fertigungsverfahren einsetzbar sind.

Die Innenkontur 16 ist an die äußere Geometrie des Rotationselements 8 angepasst. Im vorliegenden Ausführungsbeispiel der Ritzelwelle 8 ist die Innenkontur 16 das entsprechende Gegenstück zum Ritzel. Sie stellt die formschlüssige Verbindung mit dem Ritzel her.

Der Federträger 4 umfasst einen starren inneren Rahmen 62 zwischen den Federanordnungen 26, 28 und einen starren äußeren Rahmen 64 um beide Federanordnungen 26, 28, der die äußere Kontur 22 bildet. Beide Rahmen 62, 64 und die beiden Federanordnungen 26, 28 bilden die verdrehsteife und spielfreie Verbindung zwischen den beiden Konturen 16, 22.

Die innere Federanordnung 26 lässt keinen Achsversatz zu, erlaubt aber die federklemmende Halterung des Rotationselements 8. Durch die damit verbundene Vorspannkraft, wird die Spielfreiheit und ein Toleranzausgleich zum Rotationselement 8 sowie ein Ausgleich zu einem Verschleiß während des Betriebs erreicht.

Die äußere Federanordnung 28 weist die beiden Federeinheiten 42a, 42b auf, die in einer Ebene zueinander angeordnet sind, die senkrecht zur Axialrichtung steht. Die Federeinheit 42a erlaubt einen Achsversatz in y-Richtung und ist in z-Richtung sehr steif, und die Federeinheit 42b erlaubt einen Achsversatz in z-Richtung und ist in y-Richtung sehr steif, wobei die z-Richtung und die y-Richtung beliebige Richtungen senkrecht zur Axialrichtung sind.

Die Erfindung ist nicht auf die gezeigten Federanordnungen 26, 28 und insbesondere nicht auf die Formen der Ausnehmungen 36, 56a, 56b, 58a, 58b beschränkt. Insbesondere die radial äußere Federanordnung 28 kann in einfacher Weise von ihrer Form her abgewandelt werden, so dass die Ausnehmungen 56a, 56b, 58a, 58b anstelle der rechteckigen Form auch eine abgerundete Form aufweisen können. So sind teilkreisförmige Ausnehmungen denkbar oder jede andere geeignete Form. Das Gleiche gilt auch für die innere Federanordnung 26, bei der die entsprechenden Formschlusselemente, wie die Zähne 30 im Ausführungsbeispiel der Figuren, durch anders geformte Federmittel 38 gehalten sein können. Wichtig ist hierbei lediglich die radial federnde Lagerung, so dass die Formschlusselemente nach außen gedrückt werden können zum nach innen gerichteten klemmenden Halten eines Rotationselementes 8.

### Bezugszeichenliste

- 2: Wellenkupplung
- 4: Federträger
- 6: Muffe
- 8: Rotationselement
- 10: Rotationselement
- 12: Motor
- 14: Verzahnung
- 16: Kontur
- 18: Ausnehmung
- 20: Flachseite
- 22: Kontur
- 24: Verzahnung
- 26: Federanordnung
- 28: Federanordnung
- 30: Zahn
- 32: Gegenelement
- 34: Gegenelement
- 36: Ausnehmung
- 38: Federmittel
- 40: Rotationsachse
- 42a: Federeinheit
- 42b: Federeinheit
- 46a: Basis
- 46b: Basis
- 48a: Dach
- 48b: Dach
- 50: Öffnung
- 52: Steg
- 54: Längsrichtung
- 56a: Ausnehmung
- 56b: Ausnehmung
- 58a: Ausnehmung
- 58b: Ausnehmung
- 60a: Federmittel
- 60b: Federmittel
- 62: Rahmen
- 64: Rahmen
- 66: Gegenelement
- 68: Gegenelement
- 70: Gegenelement
- 72: Gegenelement

## Patentansprüche

1. Wellenkupplung (2) zur kraftschlüssigen Verbindung zweier Rotationselemente (8, 10), mit einer als Krafteingang dienenden ersten Kontur (16) zur Verbindung mit einem der Rotationselemente (8), einer als Kraftausgang dienenden zweiten Kontur (22) zur Verbindung mit dem anderen der Rotationselemente (10) und zumindest einer zwischen den beiden Konturen (16, 22) angeordneten Federanordnung (26) zum elastischen Verschieben der Konturen (16, 22) relativ zueinander, wobei die Federanordnung (26) zwei radial zueinander angeordnete Gegenelemente (32, 34), ein die Gegenelemente (32, 34) zueinander federnd lagerndes Federmittel (38) und eine Ausnehmung (36) radial zwischen den Gegenelementen (32, 34) enthält, die einen radialen Federweg zwischen den Gegenelementen (32, 34) ermöglicht,
**dadurch gekennzeichnet,**
**dass** die Federanordnung (26)
a) eines der Rotationselemente (8) umgreift und federklemmend hält und
b) eine Anzahl von inneren Gegenelementen (32) aufweist, die jeweils als Ritzelgegenzahn ausgeführt sind und einen Teil einer der Konturen (16) bilden, die eine Innenkontur ist.

2. Wellenkupplung (2) nach Anspruch 1,
**dadurch gekennzeichnet,**
**dass** die Federanordnung (26) das Rotationselement (8) achssteif hält.

3. Wellenkupplung (2) nach einem der vorhergehenden Ansprüche,
**gekennzeichnet**
**durch** eine weitere Federanordnung (28), die zwei radial zueinander angeordnete Gegenelemente (66, 68, 70, 72), ein die Gegenelemente (66, 68, 70, 72) zueinander federnd lagerndes Federmittel (60a, 60b) und eine Ausnehmung (56a, 56b, 58a, 58b) radial zwischen den Gegenelementen (66, 68, 70, 72) enthält, die einen radialen Federweg zwischen den Gegenelementen (66, 68, 70, 72) ermöglicht.

4. Wellenkupplung (2) nach Anspruch 3,
**dadurch gekennzeichnet,**
**dass** die weitere Federanordnung (28) so ausgeführt ist, dass deren Federwirkung einen Achsversatz zwischen den beiden Rotationselementen (8, 10) federnd ausgleicht.

5. Wellenkupplung (2) nach Anspruch 4,
**dadurch gekennzeichnet,**
**dass** die weitere Federanordnung (28) eine erste Federeinheit (42a, 42b) aufweist, deren beide Gegenelemente (66, 68, 70, 72) zwei parallel zueinander angeordnete, biegesteife Elemente sind, die durch zwei Federmittel (60a, 60b) miteinander verbunden sind, deren Federauslenkung eine Parallelverschiebung der beiden Gegenelemente (66, 68, 70, 72) bewirkt.

6. Wellenkupplung (2) nach Anspruch 4 oder 5,
**dadurch gekennzeichnet,**
**dass** die weitere Federanordnung (28) zumindest zwei Federeinheiten (42a, 42b) aufweist, die jeweils einen Achsversatz der beiden Rotationselemente (8, 10) federnd ausgleichen, allerdings in verschiedenen Richtungen.

7. Wellenkupplung (2) nach einem der Ansprüche 1 oder 2 und einem der Ansprüche 3-6,
**gekennzeichnet**
**durch** einen die beiden Federanordnungen (26, 28) bildenden Federträger (4), der ein senkrecht zur Axialrichtung der Rotationselemente (8, 10) ausgerichtetes Plattenelement ist.

8. Wellenkupplung (2) nach einem der Ansprüche 1 oder 2 und einem der Ansprüche 3-7,
**dadurch gekennzeichnet,**
**dass** die Ausnehmung (36, 56a, 56b, 58a, 58b) durch einen Schnitt in einem die beiden Federanordnungen (26, 28) bildenden Federträger (4) ausgebildet ist.

9. Wellenkupplung (2) nach einem der vorhergehenden Ansprüche,
**dadurch gekennzeichnet,**
**dass** das Federmittel (38, 60a, 60b) eine Blattfeder ist.

10. Wellenkupplung (2) nach einem der vorhergehenden Ansprüche,
**dadurch gekennzeichnet,**
**dass** die Federanordnung (26, 28) radial zwischen den beiden Konturen (16, 22) angeordnet ist.

11. Wellenkupplung (2) nach einem der vorhergehenden Ansprüche,
**dadurch gekennzeichnet,**
**dass** die beiden Konturen (16, 22) zumindest teilweise einander radial überdeckend angeordnet sind.

12. Wellenkupplung (2) nach einem der vorhergehenden Ansprüche,
**dadurch gekennzeichnet,**
**dass** die beiden Konturen (16, 22) und die Federanordnung (26, 28) in einer Ebene angeordnet sind, die senkrecht zu einer Axialrichtung der Rotationselemente (8, 10) liegt.

13. Wellenkupplung (2) nach einem der vorhergehenden Ansprüche,
**gekennzeichnet**
**durch** eine Muffe (6), in die ein Element eingefügt ist, das die beiden Konturen (16, 22) aufweist.

## Claims

1. Shaft coupling (2) for the frictional connection of two rotation elements (8, 10), with a first contour (16), serving as a force input, for connection to one of the rotation elements (8), a second contour (22), serving as a force output, for connection to the other of the rotation elements (10), and at least one spring arrangement (26) which is arranged between the two contours (16, 22), for the elastic displacement of the contours (16, 22) relative to each other, wherein the spring arrangement (26) contains two counter elements (32, 34) arranged radially with respect to each other, a spring means (38) resiliently mounting the counter elements (32, 34) with respect to each other, and a recess (36) radially between the counter elements (32, 34), said recess permitting a radial spring travel between the counter elements (32, 34), **characterized in that** the spring arrangement (26)
a) engages around one of the rotation elements (8) and holds the latter in a spring-clamping manner and
b) has a number of internal counter elements (32) which are each designed as a pinion counter tooth and form part of one of the contours (16), which contour is an internal contour.

2. Shaft coupling (2) according to Claim 1, **characterized in that** the spring arrangement (26) holds the rotation element (8) in an axially stiff manner.

3. Shaft coupling (2) according to either of the preceding claims, **characterized by** a further spring arrangement (28) which contains two counter elements (66, 68, 70, 72) arranged radially with respect to each other, a spring means (60a, 60b) resiliently mounting the counter elements (66, 68, 70, 72) with respect to each other, and a recess (56a, 56b, 58a, 58b) radially between the counter elements (66, 68, 70, 72), said recess permitting a radial spring travel between the counter elements (66, 68, 70, 72).

4. Shaft coupling (2) according to Claim 3, **characterized in that** the further spring arrangement (28) is designed in such a manner that the spring action thereof resiliently compensates for an axial offset between the two rotation elements (8, 10).

5. Shaft coupling (2) according to Claim 4, **characterized in that** the further spring arrangement (28) has a first spring unit (42a, 42b), the two counter elements (66, 68, 70, 72) of which are flexurally stiff elements which are arranged parallel to each other and are connected to each other by two spring means (60a, 60b), the spring deflection of which causes a parallel displacement of the two counter elements (66, 68, 70, 72).

6. Shaft coupling (2) according to Claim 4 or 5, **characterized in that** the further spring arrangement (28) has at least two spring units (42a, 42b) which each resiliently compensate for an axial offset of the two rotation elements (8, 10), but in different directions.

7. Shaft coupling (2) according to either of Claims 1 and 2 and one of Claims 3-6, **characterized by** a spring carrier (4) which forms the two spring arrangements (26, 28) and is a plate element oriented perpendicularly to the axial direction of the rotation elements (8, 10).

8. Shaft coupling (2) according to either of Claims 1 and 2 and one of Claims 3-7, **characterized in that** the recess (36, 56a, 56b, 58a, 58b) is formed by an incision in a spring carrier (4) forming the two spring arrangements (26, 28).

9. Shaft coupling (2) according to one of the preceding claims, **characterized in that** the spring means (38, 60a, 60b) is a leaf spring.

10. Shaft coupling (2) according to one of the preceding claims, **characterized in that** the spring arrangement (26, 28) is arranged radially between the two contours (16, 22).

11. Shaft coupling (2) according to one of the preceding claims, **characterized in that** the two contours (16, 22) are arranged at least partially overlapping each other radially.

12. Shaft coupling (2) according to one of the preceding claims, **characterized in that** the two contours (16, 22) and the spring arrangement (26, 28) are arranged in a plane which lies perpendicularly to an axial direction of the rotation elements (8, 10).

13. Shaft coupling (2) according to one of the preceding claims, **characterized by** a sleeve (6) into which an element which has the two contours (16, 22) is fitted.

## Revendications

1. Coupleur d'arbre (2) destiné à l'assemblage par force de deux éléments rotatifs (8, 10), comprenant un premier profil (16) servant d'entrée de force destiné à être assemblé avec l'un des éléments rotatifs (8), un deuxième profil (22) servant de sortie de force destiné à être assemblé avec l'autre des éléments rotatifs (10) et au moins un arrangement de ressorts (26) disposé entre les deux profils (16, 22) et servant à un décalage élastique des profils (16, 22) l'un par rapport à l'autre, l'arrangement de ressorts (26) contenant deux éléments antagonistes (32, 34) disposés l'un contre l'autre dans le sens radial, un moyen ressort (38) qui supporte les éléments antagonistes (32, 34) avec effet ressort l'un contre l'autre et une cavité (36) radiale entre les éléments antagonistes (32, 34), laquelle permet une course de ressort radiale entre les éléments antagonistes (32, 34),
**caractérisé en ce que**
l'arrangement de ressorts (26)
a) enserre l'un des éléments rotatifs (8) et le maintien par serrage par ressort et
b) possède une pluralité d'éléments antagonistes internes (32) qui sont respectivement réalisés sous la forme d'une dent antagoniste de pignon et forment une partie de l'un des profils (16), qui est un profil intérieur.

2. Coupleur d'arbre (2) selon la revendication 1, **caractérisé en ce que** l'arrangement de ressorts (26) maintien l'élément rotatif (8) en rigidité axiale.

3. Coupleur d'arbre (2) selon l'une des revendications précédentes, **caractérisé par** un arrangement de ressorts supplémentaire (28) qui contient deux éléments antagonistes (66, 68, 70, 72) disposés l'un contre l'autre dans le sens radial, un moyen ressort (60a, 60b) qui supporte les éléments antagonistes (66, 68, 70, 72) avec effet ressort l'un contre l'autre et une cavité (56a, 56b, 58a, 58b) radiale entre les éléments antagonistes (66, 68, 70, 72), laquelle permet une course de ressort radiale entre les éléments antagonistes (66, 68, 70, 72).

4. Coupleur d'arbre (2) selon la revendication 3, **caractérisé en ce que** l'arrangement de ressorts supplémentaire (28) est exécuté de telle sorte que son effet de ressort compense par effet de ressort un décalage axial entre les deux éléments rotatifs (8, 10).

5. Coupleur d'arbre (2) selon la revendication 4, **caractérisé en ce que** l'arrangement de ressorts supplémentaire (28) possède une première unité à ressort (42a, 42b) dont les deux éléments antagonistes (66, 68, 70, 72) sont deux éléments rigides en flexion disposés parallèlement l'un à l'autre, lesquels sont reliés entre eux par deux moyens ressorts (60a, 60b) dont la déviation de ressort provoque un décalage parallèle des deux éléments antagonistes (66, 68, 70, 72).

6. Coupleur d'arbre (2) selon la revendication 4 ou 5, **caractérisé en ce que** l'arrangement de ressorts supplémentaire (28) possède au moins deux unités à ressort (42a, 42b) qui compensent respectivement, par effet de ressort, un décalage axial des deux éléments rotatifs (8, 10), toutefois dans des directions différentes.

7. Coupleur d'arbre (2) selon l'une des revendications 1 ou 2 et l'une des revendications 3 à 6, **caractérisé par** un porte-ressorts (4) qui forme les deux arrangements de ressorts (26, 28), lequel est un élément en plaque orienté perpendiculairement à la direction axiale des éléments rotatifs (8, 10).

8. Coupleur d'arbre (2) selon l'une des revendications 1 ou 2 et l'une des revendications 3 à 7, **caractérisé en ce que** la cavité (36, 56a, 56b, 58a, 58b) est formée par une découpe dans un porte-ressorts (4) qui forme les deux arrangements de ressorts (26, 28).

9. Coupleur d'arbre (2) selon l'une des revendications précédentes, **caractérisé en ce que** le moyen ressort (38, 60a, 60b) est un ressort à lame.

10. Coupleur d'arbre (2) selon l'une des revendications précédentes, **caractérisé en ce que** l'arrangement de ressorts (26, 28) est disposé dans le sens radial entre les deux profils (16, 22).

11. Coupleur d'arbre (2) selon l'une des revendications précédentes, **caractérisé en ce que** les deux profils (16, 22) sont disposés avec chevauchement radial au moins partiel l'un de l'autre.

12. Coupleur d'arbre (2) selon l'une des revendications précédentes, **caractérisé en ce que** les deux profils (16, 22) et l'arrangement de ressorts (26, 28) sont disposés dans un plan qui est perpendiculaire à une direction axiale des éléments rotatifs (8, 10).

13. Coupleur d'arbre (2) selon l'une des revendications précédentes, **caractérisé par** un manchon (6) dans lequel est inséré un élément qui présente les deux profils (16, 22).
